(19) Europäisches Patentamt

European Patent Office

Office européen des brevets

(11) **EP 1 249 837 A2**

(12) **EUROPEAN PATENT APPLICATION**

(43) Date of publication:
**16.10.2002 Bulletin 2002/42**

(51) Int Cl.⁷: **G11B 20/00**, G11B 20/10, G10L 19/02, H04B 1/66

(21) Application number: **02396050.3**

(22) Date of filing: **11.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.04.2001 FI 20010770**

(71) Applicant: **Nokia Corporation**
**02150 Espoo (FI)**

(72) Inventor: **Ojanperä, Juha**
**33710 Tampere (FI)**

(74) Representative: **Pursiainen, Timo Pekka**
**Tampereen Patenttitoimisto Oy,**
**Hermiankatu 6**
**33720 Tampere (FI)**

(54) **A method for decompressing a compressed audio signal**

(57) The invention relates to a method for decompressing a compressed audio signal. In the compression of an audio signal, samples of the audio signal are taken, the samples are compiled into sample sets comprising a given number of samples, and the sample sets are subjected to time-to-frequency conversion, to form spectrum components. In the method, the spectrum components are subjected to frequency-to-time conversion (16) to form a decompressed audio signal, only some of the spectrum components formed in the time-to-frequency conversion being used in the frequency-to-time conversion (16).

Fig 3

EP 1 249 837 A2

**Description**

The present invention relates to a method for decompressing a compressed audio signal according to the preamble of the appended claim 1, in which method samples are taken of the audio signal. The invention also relates to a system for transmitting an audio signal according to the appended claim 5, a decompressing device according to the appended claim 7, and an electronic device according to the preamble of the appended claim 8.

Various audio compression systems form compressed signals of an analog audio signal, such as a speech signal, which are stored and/or transmitted to a receiver or a decompressing device. In the receiver or decompressing device, an audio signal is formed on the basis of these compressed signals. The quantity of information to be produced in the compression is affected *e.g.* by the fact how efficiently the compression can be performed at the transmission stage.

For the compression, digital samples are formed of an analog signal at intervals of *e.g.* 0.125 ms. These samples are preferably processed in sets of a fixed length, such as sets of samples formed in about 20 ms, which are subjected to compression operations. However, the size of the sample sets is not necessarily constant, but it may vary depending, for example, on how dynamic the signal in question is. For example, in advanced audio coding (AAC) of the MPEG-4 system, two different sizes of sample sets are used: 1024 samples and 256 samples. The larger set of samples is used when the signal is relatively stationary and, correspondingly, the smaller set of samples is used during transient signals. These sets of samples taken at intervals are also called frames. Furthermore, in the formation of the frames, a window filter is used, whereby possible transients between successive frames can be balanced. Below in this description, such compression based on advanced audio coding (AAC) will be used as an example, but it is obvious that the invention can also be applied in other methods for compressing audio signals and with sample sets of different sizes.

In advanced audio coding, samples representing an audio signal on the time level are converted to the frequency level, forming a set of signal spectrum components. This conversion to the frequency level is preferably made by using modified discrete cosine transform (MDCT). The size of the conversion is preferably either $1 \times 1024$ or $8 \times 128$ according to how stationary or transient the signal to be transformed in each situation is. In the conversion, 1024 spectrum components are thus formed for each frame. In the conversion, it is also possible to use so-called filter banks consisting of a set of band pass filters whose pass bands are located at different locations in the frequency range to be processed. In the conversion to the frequency level, it is possible to take into account the varying sensitivity of the human ear to sounds at different frequencies. Thus, in more critical frequency ranges, it is possible to form more spectrum components than in less critical frequency ranges. Furthermore, temporal noise shaping (TNS) can be performed, *e.g.*, to reduce quantization noise, particularly in such a signal which is an intermediate form of a uniform signal and an impulsive signal.

In addition, at the compression stage, it is possible to perform backwards adaptive prediction (BWAP), if necessary, wherein the signal to be compressed at the time is compared with a previously compressed signal and it is determined, whether the quantity of information to be transmitted can be reduced by transmitting, for example, a reference to such a previously transmitted frame as well as a difference signal, on the basis of which it is possible, at the stage of decompressing the signal, to reconstruct a signal substantially corresponding to the transmitted signal.

The signal compression step may also contain the processing of a stereo signal (intensity stereo, IS; mid/side stereo, M/S), wherein for example in a situation in which the signals on both stereo channels have substantially the same content, it is not necessary to transmit the signals of both stereo channels separately, but it will suffice to transmit either the signal of one stereo channel (normally the left channel), or one stereo channel (normally the left channel) as a whole and only part of the other stereo channel (normally the right channel). Thus, at the receiving stage, the signals of the different stereo channels are formed on the basis of these transmitted signals. By means of this arrangement, it is possible to further reduce the quantity of the signal to be transmitted. This method can also be applied by examining if the quantity of the signal to be transmitted can be reduced by transmitting, instead of the signals of the stereo channels, the sum and difference signals of these signals.

The above-mentioned operations on the audio signals to be compressed are still followed by quantization, in which each spectrum component to be transmitted is transformed to a predetermined value which is either the next value greater than the value to be transformed, or the preceding smaller value. Before the quantization, however, scaling can be performed, in which the values of each frame to be quantized are examined, and preferably the greatest value is searched for. The other values are scaled on the basis of this greatest value so that all the values have a common scale factor (exponent) which is transmitted only once for each frame. Furthermore, of the quantized values contained in the frame, a mantissa is transmitted, wherein at the receiving stage, the mantissa value can be scaled back to the correct order of magnitude by means of said scale factor.

After the scaling and quantization, these quantized values are encoded, wherein the aim is to further reduce the quantity of information. For example, for coding of an audio signal in the MPEG-4 system, Huffman coding is used, which is a so-called variable length coding (VLC) system, meaning that the length of the code words may vary. Another feature of the Huffman coding is that no code word is the beginning of another code word. In the coding, it is also possible to use several codebooks, of which a suitable one is selected for each quantized set of samples to be encoded. In the coding, a set of quantized samples is selected, which are encoded by using the same codebook. Thus, the decompressing device must be transmitted information about not only the code word but also the codebook represented by each set of code words.

The codebook is preferably formed as a table of two or four signed or unsigned variables. Thus, the coding can be performed in sets of several spectrum components, wherein the code word is selected on the basis of the values of the spectrum component set; that is, one code word is selected for each two or four components, to be transmitted to the communication channel or stored in a storage means, such as a CD-ROM, DVD or fixed disk.

Upon decompressing a compressed audio signal, the operations inverse to the above operations are performed substantially in the reverse order. Thus, on the basis of the codebook data of the received set of code words, a decoding table is selected, after which the indices corresponding to the code words of this set to be decoded are determined. Each index refers to a certain location in the codebook, containing a value which can be used to determine the transmitted e.g. two or four quantized spectrum components. These decoded symbols are further subjected to inverse quantization and restoration of the scaling. In addition, it is possible to carry out a stereo signal processing step, a predicted signal processing step and noise shaping, if necessary. After this, the signal is transformed from the frequency level to the time level, wherein the output signal of the decompressing device is a signal which substantially corresponds to the encoded audio signal. The compression, data transmission and decompression may cause slight distortions in the signal, depending, for example, on how great quantizing steps are used, but these distortions do not normally have a great significance in practice, within the scope of capacity requirements of such a system.

A problem in such an audio compression system is the need of a high computing capacity at the decompression stage. For example, for fast forward playback of the audio signal, this can be implemented in prior art solutions by increasing the sampling rate, wherein the rate must also be increased in the decompressing device in a corresponding way. Thus, the computing complexity is increased in proportion to the rate of the fast forward playback. Particularly in portable devices, the computing efficiency may be limited, wherein fast forward playback cannot be used.

In portable mobile communication devices with the facility to listen to a compressed stored audio signal (*e.g.* music), problems occur for example upon an incoming call, because the computing capacity of the mobile communication device is not sufficient for both performing the call operations and listening to the audio signal. Thus, the listening to the audio signal must be interrupted so that the user can be informed of an incoming call with a ringing tone.

It is an aim of the present invention to provide a method for making the decompression of audio signals more efficient. The method according to the present invention is characterized in what will be presented in the characterizing part of the appended claim 1. The system for transmitting an audio signal according to the present invention is characterized in what will be presented in the characterizing part of the appended claim 5. The device for decompressing an audio signal according to the present invention is characterized in what will be presented in the characterizing part of the appended claim 7. The electronic device according to the present invention is characterized in what will be presented in the characterizing part of the appended claim 8.

The present invention shows remarkable advantages compared to solutions of prior art. When applying the method of the invention, it is possible to play the audio signal fast forward in such a way that the user hears the audio signal also during the fast forward playback, without a need to increase the computing capacity compared to a normal situation of listening to the audio signal. Thus, the fast forward playback of an audio signal can also be implemented in devices in which no efficient signal processors are available. Furthermore, the invention makes it possible that, for example, when a call comes in, the listening to an audio signal does not need to be completely interrupted, but it is also simultaneously possible to perform decompression of the audio signal for listening and to form a ringing tone for the incoming call.

In the following, the invention will be described in more detail with reference to the appended drawings, in which

Fig. 1  shows a system for transmitting an audio signal according to a preferred embodiment of the invention in a reduced block chart,

Fig. 2  shows an electronic device according to a preferred embodiment of the invention, in which the decompressing method according to the invention can be applied, and

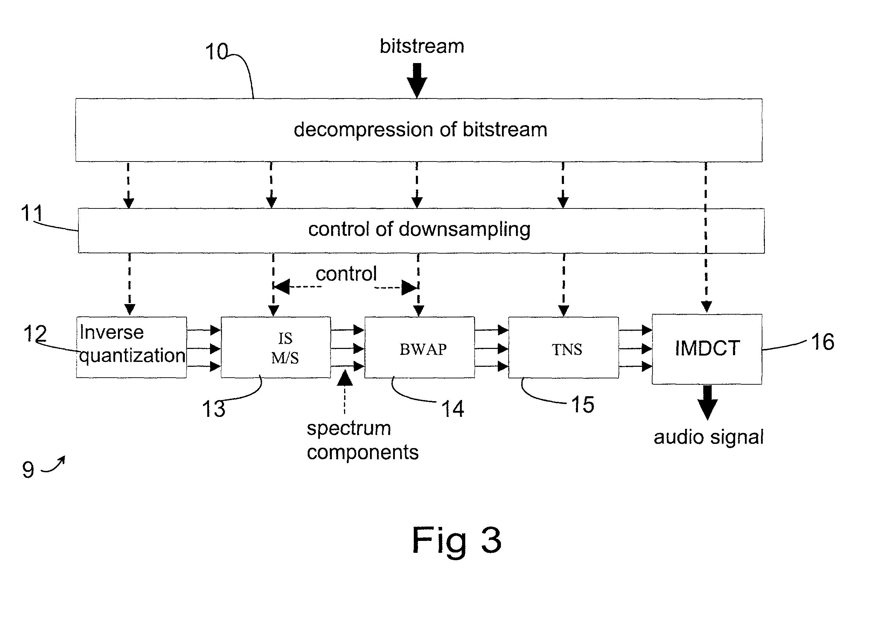

Fig. 3  shows a decompressing device according to a preferred embodiment of the invention.

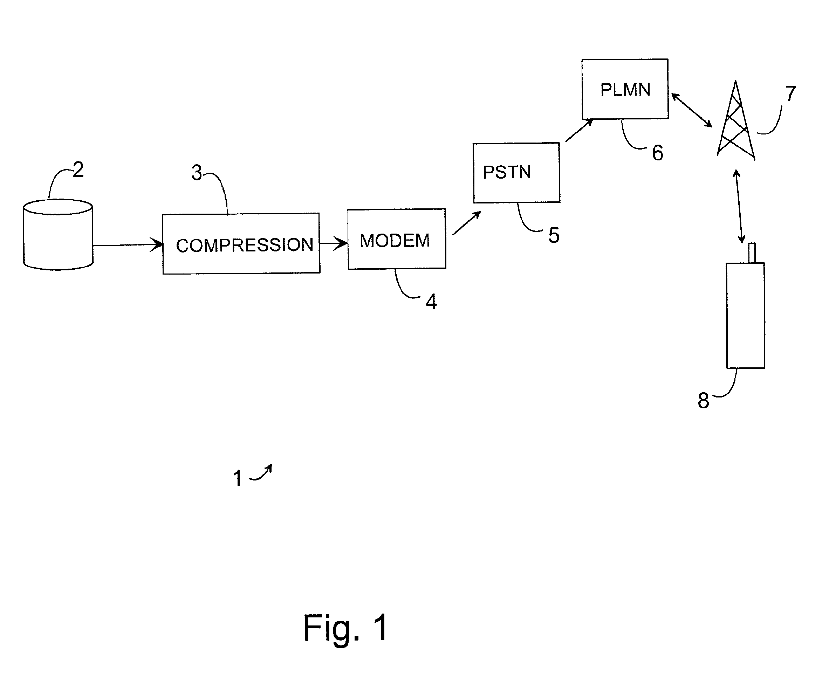

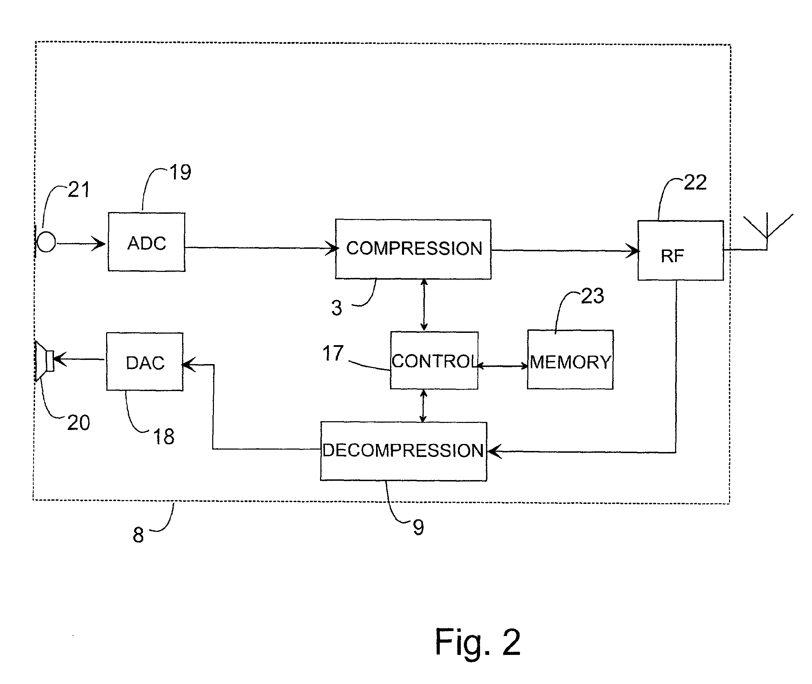

Figure 1 shows, in a reduced block chart, a system 1 for transmitting an audio signal according to a preferred embodiment of the invention. In the system, the audio signal to be transmitted is, for example, an audio signal which is stored in a database 2 and which can be either compressed or uncompressed. If the audio signal is uncompressed, the audio signal is compressed in a compression block 3. Before this, however, an analog-to-digital conversion must be made in an analog-to-digital converter 19 (Fig. 2), if the audio signal is in analog format, for example a microphone signal 21 of a wireless communication device 8. The compression block 3 preferably comprises a time-to-frequency converter, such as a modified discrete cosine transform (MDCT) converter, a noise shaping block, a prediction block, a stereo processing block, and a quantization block. However, these functional blocks contained in the compression block are not separately shown in Fig. 1. The time-to-frequency converter provides spectrum information representing the frequency response of the audio signal, comprising e.g. 1024 subfrequency ranges. Thus, 1024 spectrum components are formed of each sample frame. These spectrum components can be subjected to temporal noise shaping (TNS), backwards adaptive prediction (BWAP) and mid/side stereo processing (M/S). After these steps, the spectrum components are quantized in a quantization block, which is further followed by coding in a coding block. As the coding, for example Huffman coding or another variable length coding is used. The symbols formed in the coding are transferred, for example, to a transmission buffer to be transmitted on a communication channel, or to be stored in a storage means. If information is transmitted on a communication channel, such as a telecommunication network 5, 6 via a modem 4, modulation measures, known as such, are also taken. The telecommunication network may comprise a public switched telephone network 5 (PSTN) and/or a public land mobile network 6 (PLMN), such as a mobile communication network. By means of a base station 7 of the mobile communication network, the compressed audio signal can be transmitted to the electronic device 8, which preferably comprises means for performing mobile station functions.

The following is a description of the decompression of a received, compressed audio signal in a normal listening situation, in which the signal is decompressed at a natural rate. In the electronic device 8, the compressed signal is decompressed in a decompression block 9. It comprises e.g. a bitstream decompression block 10, in which the data to be transferred to the different blocks and to be used in the decompression of the signal are separated from the received bitstream. The bitstream decompression block 10 determines, on the basis of the received symbols, the transmitted quantized spectrum components and transmits them via a downsampling control block 11 to an inverse quantization block 12. At this stage, the downsampling control block 11 does not process the data transmitted from the bitstream decompression block 10.

At this stage, the numerical values represent the quantized spectrum components, wherein they are subjected to reverse quantizing in a reverse quantizing block 12. Furthermore, if necessary, the stereo signal is subjected to processing operations in a stereo signal processing block 13, prediction decompression operations in a prediction signal processing block 14, and noise shaping in a noise shaping block 15. In the system according to a preferred embodiment of the invention, the above-mentioned blocks 12, 13, 14, 15 receive frames of 1024 spectrum components, on the basis of which the blocks process these spectrum components or transmit them to the next block without processing.

The spectrum components thus represent the frequency properties of the compressed signal. These spectrum components must further be converted from the frequency level to the time level in a frequency-to-time conversion block 16. This conversion is preferably made by inverse modified discrete cosine transform IMDCT. In this preferred embodiment, the transform length is either $1 \times 1024$ or $8 \times 128$, depending on the conversion alternative used at the compression stage. After this, the output of the frequency-to-time conversion block 16 is a signal which substantially corresponds to the original audio signal, provided that no significant transmission and decompressing errors occurred at the stages of processing of the audio signal. This signal is further transformed to analog format in a digital-to-analog converter 18 (Fig. 2), after which the signal can be heard as a sound *e.g.* via a speaker 20.

The following is a description of the operation of the method according to a preferred embodiment of the invention in a situation in which one wishes to play a compressed audio signal fast forward, that is, the user hears the audio signal during the fast forward playback and can thus better find a desired point in the compressed audio signal. So that no increase in the computing capacity will be needed for the fast forward playback, the number of samples to be processed in the fast forward playback must be reduced per unit of time. In the method according to a preferred embodiment of the invention, this is provided in the following way. At the stage of decompression of a compressed audio signal, downsampling is performed, which in this description means that only some of the spectrum components contained in the frame are used in the decompression. One advantageous downsampling coefficient is 2, wherein the number of samples to be processed per each frame is reduced to a half. For fast forward playback, the decompression of the samples of two frames is performed in the same time. This will not, however, increase the required computing capacity, because downsampling was performed in the decompression.

Let us look at the downsampling mathematically. The function of the inverse modified discrete cosine transform can be illustrated with the following formula:

$$y_i(n) = \frac{2}{N} \sum_{k=0}^{N/2-1} X(i,k) \cos\left(\frac{2\pi}{N} \cdot (n+n_0) \cdot \left(k + \frac{1}{2}\right)\right), \quad 0 \le n < N \qquad (1)$$

in which
$X$ = spectrum coefficients
$i$ = window index
$k$ = spectrum coefficient index
$N$ = window length
$n_0 = (N/2+1)/2$

The reconstructed spectrum coefficients X(i,k) represent matrices with a dimension of either $1 \times 1024$ or $8 \times 128$. The corresponding samples $y_i(n)$ of the time level are windowed, and the initial part of the resulting sequence is attached to the terminal part of the windowed sequence formed in the preceding conversion step, to produce reconstructed output samples $out_i(n)$. In the windowing, preferably two window functions $w_i(n)$ are used for the samples $y_i(n)$ of the time level. The windowing function to be applied each time is preferably selected according to a parameter in the bitstream to be decompressed, which thus indicates the windowing function used at the compression stage. Mathematically, the windowing can be presented in the following way.

$$out_i(n) = w_i(n) \cdot y_i(n) + z_{i-1}(n), \qquad 0 \le n < N/2$$
$$z_{i-1}(n) = w_{i-1}\left(n + N/2\right) \cdot y_{i-1}\left(n + N/2\right) \tag{2}$$

The window length N is preferably either 2048 or 256, depending on the sets of samples ($1 \times 1024$ or $8 \times 128$) contained in the frame to be processed at a time. In a downsampling situation, the window length used is either 1024 or 128, if the downsampling coefficient is 2. Thus, in the frequency-to-time conversion, the transform length is either $1 \times 512$ or $8 \times 64$, respectively. Also the windowing functions are computed by using the changed values. At the same time, the reduction of the transform length means that the frequency-to-time conversion is simplified accordingly, wherein the computing capacity required in the frequency-to-time conversion is also reduced. This is of great importance in applications in practice, since the frequency-to-time conversion is typically one of the operations requiring the highest computing capacity in devices for decompressing an audio signal.

In connection with the fast forward function, the downsampling control block 11 performs, for example, processing of some parameters received with the bitstream. On such parameter to be processed is the maximum scale factor band (max_sfb). Several blocks of the device for decompressing an audio signal perform operations on sets of sequential spectrum components, which are called scale factor bands. For each spectrum component of the same scale factor band, the same scale factor is used in the compression. As already mentioned above in this description, the frequency range of audio signals to be processed is divided into smaller subranges on the basis of the properties of human hearing. For this reason, the width of these subranges may vary, wherein the number and width of the scale factor bands is, correspondingly, dependent on the transform length of the time-to-frequency conversion and the sampling frequency.

Some standards related to audio coding, such as the AAC, specify the initial points of each scale factor band at different transform lengths (1024/128) and at different sampling frequencies. The maximum scale factor band thus indicates the widest frequency range to be used in the compression. Also in the method according to the invention, this maximum value for the scale factor band parameter is used at the compression stage. At the decompression stage, however, the downsampling control block 11 will, if necessary, change the limits for this value and the related constant tables in such a way that the number of the spectrum components corresponding to the parameter value is not greater than the limiting value $sb_{thr}$ for the number of spectrum components due to downsampling, which is determined by the following formula:

$$sb_{thr} = \frac{M}{\text{downsampling coefficient}} \tag{3}$$

in which M is either 1024 or 128, depending on the sets of samples contained in the frame to be processed each time. Thus, those blocks of the decompression block 9 which operate according to the scale factor band, perform decompression operations preferably up to the maximum scale factor band determined by the scale factor band parameter, omitting the scale factor bands at higher frequencies. However, those blocks of the decompression block 9, which do not operate according to the scale factor band, use the limiting value $sb_{thr}$ for the number of spectrum components as the functional parameter.

For example, for playing a compressed signal stored in a memory, compressed values are retrieved from the memory at the rate given by the downsampling coefficient, compared with normal reproduction. After this, the sets of spectrum components are, correspondingly, subjected to downsampling according to the downsampling coefficient, and decompression in the decompression block 9. Thus, the output signal is the audio signal to be played fast forward.

The above-described method according to a preferred embodiment of the invention can also be applied for simultaneous reproduction of more than one audio signal in an electronic device. This may be necessary *e.g.* in a situation in which the electronic device 8 comprises means 9, 18, 20 for reproducing a compressed audio signal and means 22 for performing mobile station functions. The user may be listening to an audio signal stored in the electronic device, when there is a call coming in. Thus, in the electronic device according to the invention, the audio signal to be listened to is preferably subjected to downsampling so that the rate of transfer of compressed information to the decompression block is not changed, but the decompression block processes the compressed information by applying the downsampling method. Thus, the electronic device can also generate a ringing tone for informing about the incoming call. This ringing tone may also be *e.g.* a melody stored in compressed format, the downsampling method being also applied in its reproduction.

Even if the invention has been described above by using the numerical value 2 as an example of the downsampling coefficient, it is obvious that other coefficients can be applied as well. In applications in practice, however, the integer powers of two are the most advantageous, *e.g.* for the reason that the algorithms developed for implementing the inverse modified discrete cosine transform have the best effect in sample sets with a length of $2^n$, in which n is, in principle, any positive integer.

The above-presented method can be generalized to be applied also in several other audio decoding systems which utilize the division to subbands and the conversion techniques (time-to-frequency, frequency-to-time). The downsampling is thus performed at one to three of the following stages, of which the last one is necessary:

From the bitstream to be received/decompressed, only the bits necessary for decompression are selected. In compressing devices applying a conversion technique, Huffman coding is typically used for quantized spectrum components. Of the bits formed in Huffman coding, however, only some are required when applying downsampling according to the invention in the decompression of a signal. The bits which are required depend, for example, on the placing of the different bits in the frame, the transfer protocol, and the file format to be used. In the least favourable situation, Huffman decoding must be performed for all spectrum components.

Only the spectrum components of the lower frequency bands are decompressed, which contain important information in view of the inverse transform. The inverse modified discrete cosine transform block will thus omit the higher frequencies.

The transform length of the inverse transform is reduced, wherein the implementation of the inverse converter becomes simpler.

Although, in the above description of the invention, the frequency range was reduced by omitting some of the higher frequencies, the invention can also be applied so that the frequency ranges to be omitted are selected in another way. Thus, for example, frequency ranges (scale factor bands) in the centre or even in the beginning of the spectrum are omitted in the inverse transform, and the transform length can still be reduced.

The different steps of the method according to the invention can be implemented, for example, in the application software of a control means 17. The control means 17 used can be, for example, a microprocessor, a digital signal processing unit, or the like.

The electronic device 8 can be, for example, a wireless communication device, a portable computer, or a portable sound reproducing device. The audio signals to be decoded are either transferred via communication means 22, or the audio signal can be stored in a storage means, such as a memory 23, on a disk, on a CD-ROM, on a DVD, on a memory card, such as FLASH, on a fixed disk, or the like.

Also in other respects, the present invention is not limited solely to the above-presented embodiments, but it can be modified within the scope of the appended claims.

**Claims**

1. A method for decompressing a compressed audio signal, in which samples of an audio signal are taken in the decompression of the audio signal, the samples are compiled into sample sets comprising a given number of samples, and the sample sets are subjected to a time-to-frequency conversion to form spectrum components, wherein in the method, the spectrum components are subjected to a frequency-to-time conversion to form a decompressed audio signal, **characterized in that** only some of the spectrum components formed in the time-to-frequency conversion are used in the frequency-to-time conversion.

2. A method according to claim 1, **characterized in that** the method is used to provide fast forward playback of the audio signal.

3. A method according to claim 2, **characterized in that** in the method, a downsampling coefficient is selected, the rate of forming spectrum components in the compression is increased by said downsampling coefficient, and downsampling is performed, in which the transform length of the frequency-to-time conversion is reduced by said downsampling coefficient.

4. A method according to claim 1, **characterized in that** the method is used for simultaneous reproduction of two or more audio signals, wherein at least one audio signal to be reproduced is in a compressed format.

5. A system (1) for transmitting an audio signal, comprising an audio signal compression block (3) for forming a compressed audio signal, and a decompression block (9) for decompressing the compressed audio signal, in which samples of the audio signal have been taken in the compression of the audio signal, the samples have been compiled into sample sets comprising a given number of samples, and the sample sets have been subjected to time-to-frequency conversion to form spectrum components, wherein the decompression block (9) comprises a frequency-to-time converter (16) to perform frequency-to-time conversion of the spectrum components to form a decompressed audio signal, **characterized in that** only some of the spectrum components formed in the time-to-frequency conversion are arranged to be used in the frequency-to-time conversion.

6. A system according to claim 5, **characterized in that** it comprises means for providing fast forward reproduction of the audio signal.

7. A device for decompressing a compressed audio signal, in which samples of the audio signal have been taken in the compression of the audio signal, the samples have been compiled into sample sets comprising a given number of samples, and the sample sets have been subjected to time-to-frequency conversion to form spectrum components, wherein the device (9) for decompressing a compressed audio signal comprises a frequency-to-time converter (16) to perform frequency-to-time conversion of the spectrum components to form a decompressed audio signal, **characterized in that** only some of the spectrum components formed in the time-to-frequency conversion are arranged to be used in the frequency-to-time conversion.

8. An electronic device (108) comprising a decompression block (9) for decompressing the compressed audio signal, in which samples of the audio signal have been taken in the compression of the audio signal, the samples have been compiled into sample sets comprising a given number of samples, and the sample sets have been subjected to time-to-frequency conversion to form spectrum components, wherein the decompression block (9) comprises a frequency-to-time converter (16) to perform frequency-to-time conversion of the spectrum components to form a decompressed audio signal, **characterized in that** only some of the spectrum components formed in the time-to-frequency conversion are arranged to be used in the frequency-to-time conversion.

9. An electronic device according to claim 8, **characterized in that** it comprises means for providing fast forward reproduction of the audio signal.

10. An electronic device according to any of the claims 8 to 9, **characterized in that** it comprises means (22) for performing mobile station functions.

Fig. 1

Fig. 2

EP 1 249 837 A2

Fig 3

EP 1 249 837 A2